## Europäisches Patentamt
## European Patent Office
## Office européen des brevets

(11) Veröffentlichungsnummer: **0 232 891 B1**

# EUROPÄISCHE PATENTSCHRIFT

(45) Veröffentlichungstag der Patentschrift: **08.01.92**

(21) Anmeldenummer: **87101789.3**

(22) Anmeldetag: **10.02.87**

(51) Int. Cl.⁵: **E21B 4/00, E21B 4/02, H02K 49/10, //E21B47/00**

(54) **Bohrwerkzeug für Tiefbohrungen.**

(30) Priorität: **12.02.86 DE 3604270**

(43) Veröffentlichungstag der Anmeldung:
**19.08.87 Patentblatt 87/34**

(45) Bekanntmachung des Hinweises auf die
Patenterteilung:
**08.01.92 Patentblatt 92/02**

(84) Benannte Vertragsstaaten:
**BE FR GB NL**

(56) Entgegenhaltungen:
**GB-A- 2 165 592**
**US-A- 3 826 134**
**US-A- 4 115 040**
**US-A- 4 120 618**
**US-A- 4 558 570**

**SOVIET INVENTIONS ILLUSTRATED, Woche E11, Section H/Q, 28. April 1982, Zusammenfassung Nr. 21518, H01/Q49, Derwent Publications Ltd, London, GB;**

(73) Patentinhaber: **Eastman Christensen Company
365 Bugatti Street
Salt Lake City Utah 84126(US)**

(72) Erfinder: **Jürgens, Rainer, Dr. Ing.
Osterloher Landstrasse 20
W-3100 Osterloh(DE)**
Erfinder: **Hense, Ulrich, Dr. Ing.
Wachtelweg 6
W-3107 Hambühren(DE)**

(74) Vertreter: **Busse & Busse Patentanwälte
Postfach 1226 Grosshandelsring 6
W-4500 Osnabrück(DE)**

**Beschreibung**

Die Erfindung bezieht sich auf ein Werkzeug für Tiefbohrungen in einer Ausbildung gemäß dem Oberbegriff des Anspruchs 1. Bei einem bekannten, als Strömungsmeßgerät für Tiefbohrungen ausgebildeten Werkzeug (US-A-3 826 134) läuft der Außenmagnetträger der Kupplung in einem zur Umgebung hin abgedichteten Aufnahmeraum für den anzutreibenden Verbraucher um, und die Umgebung des Innenmagnetträgers ist ein mit Schmiermittel gefüllter Raum.

Der Erfindung liegt die Aufgabe zugrunde, ein Werkzeug, insbesondere ein Bohrwerkzeug für Tiefbohrungen, zu schaffen, bei dem eine zuverlässige Antriebsübertragung über die Dauermagnetkupplung gewährleistet ist, obwohl der Außenmagnetkörper der Kupplung der Bohrspülung ausgesetzt ist.

Die Erfindung löst diese Aufgabe mit den Merkmalen des Anspruchs 1. Hinsichtlich weiterer Ausgestaltungen wird auf die Ansprüche 2 und 3 verwiesen.

Bei der erfindungsgemäßen Gestaltung des Werkzeugs ist sichergestellt, daß trotz Umlaufens des Außenmagnetkörpers in einer der Bohrspülung ausgesetzten Umgebung dieser frei von Beeinträchtigungen arbeitet, da eine Durchströmung des Spaltes zwischen dem Außenmagnetträger und dem Spaltrohr der Kupplung durch Bohrspülung unterbunden ist. Daher können sich in diesem Spalt keine Sedimente aus der Bohrspülung ablagern, die den Spalt fortschreitend verengen und die Gefahr eines Festsetzens des Außenmagnetkörpers begründen.

Dies ist auch dann gewährleistet, wenn die Dauermagnetkupplung als zylindrische Zentralmagnetkupplung ausgebildet ist, die bei platzsparender Ausführbarkeit besonders hohe Drehmomente übertragen kann, wobei die Ausbildung der Labyrinthdichtung mit einer den Außenmagnetträger in geringem Abstand koaxial umgebenden Hülse eine besonders einfache und dabei wirksame Ausgestaltung darstellt.

Ein Ausführungsbeispiel des Gegenstands der Erfindung ist in der Zeichnung näher veranschaulicht. In der Zeichnung zeigen:

Fig. 1    einen abgebrochenen Längsschnitt durch ein Tiefbohrwerkzeug nach der Erfindung, und

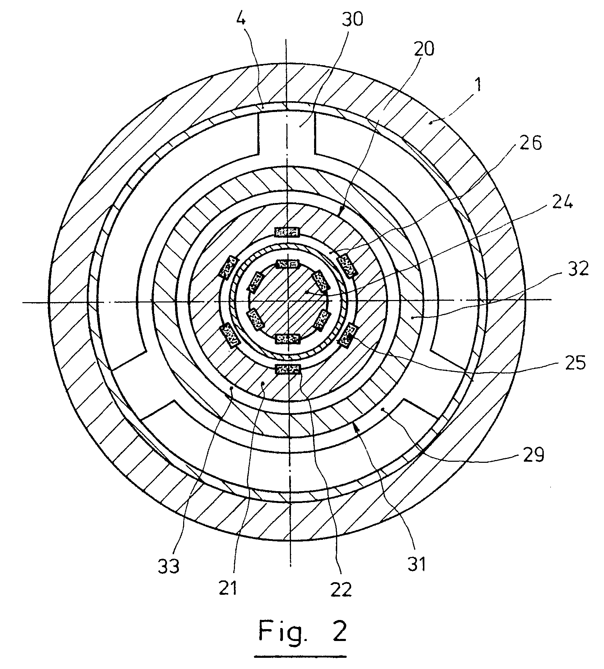

Fig. 2    einen Schnitt nach der Linie II-II in Fig 1.

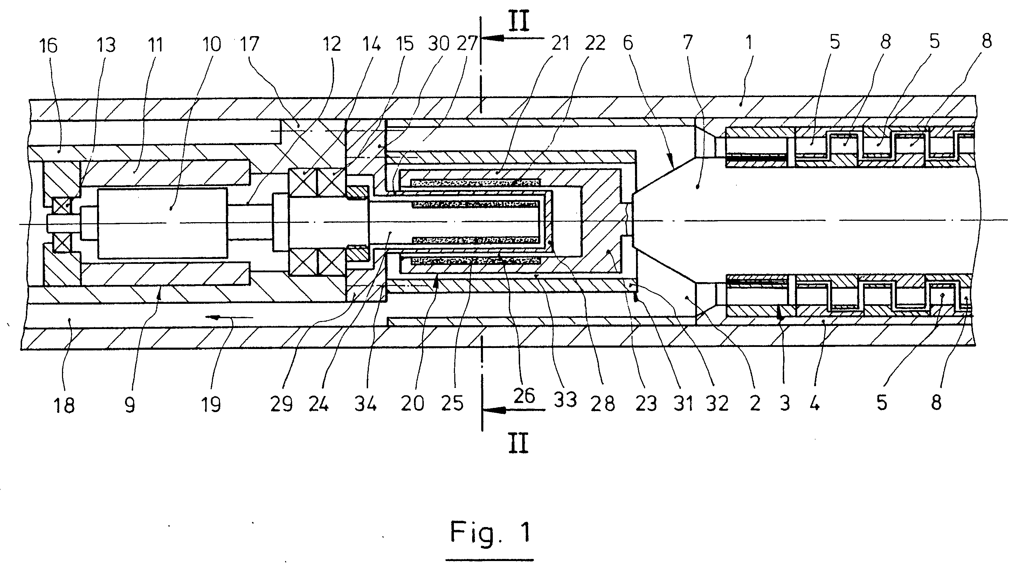

Das in Fig. 1 schematisch veranschaulichte Bohrwerkzeug für Tiefbohrungen umfaßt im einzelnen ein rohrförmiges Gehäuse 1, das einen Teil eines Bohrrohrstranges bilden kann. In dem Gehäuse 1 ist ein Antriebsaggregat 2 abgestützt, das irgendeine bekannte oder geeignete Ausbildung haben kann. Bevorzugt finden jedoch von der Bohrspülung betätigte Tieflochmotoren wie z.B. die im Ausführungsbeispiel dargestellte Turbine oder ein nach dem Moineau-Prinzip arbeitender Verdrängungsmotor Anwendung. Die dargestellte Turbine umfaßt einen Stator 3, der sich in einem rohrförmigen Statorgehäuse 4 abstützt und feststehende Schaufelkränze 5 aufweist, sowie einen Rotor 6, dessen Rotorwelle 7 mitumlaufende Schaufelkränze 8 trägt.

Das Antriebsaggregat 2 treibt einen Verbraucher 9 an, und als Verbraucher 9 kann jedes drehantriebsbedürftige Aggregat Verwendung finden, das bei Tiefbohrungen benötigt wird. In Betracht kommen in erster Linie Generatoren, Sensoren, Meßgeräte aller Art sowie Pumpen. Der dargestellte Verbraucher 9 ist als Generator ausgebildet und weist einen Läufer 10 auf, der koaxial in einem Ständer 11 drehbar ist. Hierzu ist die Läuferwelle 12 mittels Lager 13,14,15 in einem kapselnden Gehäuse 16 abgestützt, das sich im Bereich radialer Ansätze 17 am Gehäuse 1 abstützt und mit diesem einen Umfangsspalt 18 für den Durchtritt von Bohrspülung in Richtung des Pfeiles 19 beläßt.

Für den Antrieb des Verbrauchers 9 durch das Antriebsaggregat 2 ist eine berührungslose Dauermagnetkupplung 20 vorgesehen, die bei dem dargestellten Ausführungsbeispiel und bevorzugt als Zentralmagnetkupplung ausgebildet ist. Grundsätzlich kann die berührungslos arbeitende Dauermagnetkupplung 20 auch als Stirnmagnetkupplung ausgebildet sein.

Die Dauermagnetkupplung 20 besteht bei dem dargestellten Ausführungsbeispiel im einzelnen aus einem kreisrohrförmigen Außenmagnetträger 21, der in seine Innenseite eingelassene Dauermagnete 22 abstützt, die dementsprechend auf einem Kreisbogen angeordnet sind. Der Außenmagnetträger 21 ist auf seiner dem Rotor 6 zugewandten Seite durch eine Abschlußwand 23 verschlossen und im Bereich dieser Wandung mit der Welle 7 des Rotors 6 des Antriebaggregates 2 verbunden.

Die Dauermagnetkupplung 20 umfaßt ferner einen als Wellenzapfen ausgebildeten Innenmagnetträger 24, der bei dem dargestellten Beispiel Teil der Welle 12 des Verbrauchers 9 ist. In die Außenseite des Innenmagnetträgers 24 sind Dauermagnete 25 eingelassen, die dementsprechend ihrerseits auf einem Kreisbogen angeordnet sind. Die Form, die Abmessung und die Zahl der Magnete richtet sich nach dem jeweils zu übertragenden Drehmoment. Die Anordnung der Magnete richtet sich nach der geometrischen Auslegung der Dauermagnetkupplung 20, die von Parametern wie dem zur Verfügung stehenden Innendurchmesser des Gehäuses 1 etc. abhängt.

Bei dem dargestellten Ausführungsbeispiel ist die Dauermagnetkupplung 20 nicht nur als Zentralmagnetkupplung, sondern diese zugleich auch als Spaltrohrkupplung ausgebildet. Dementsprechend ist in dem Spalt 26 ein Spaltrohr 27 vorgesehen, das durch eine Stirnwand 28 verschlossen ist und den Innenmagnetträger 24 vollständig abschirmt. Das Spaltrohr 27 geht in einen Anschlußflansch 29 über, der unter Abdichtung fest mit dem kapselnden Gehäuse 11 des Verbrauchers 9 verbunden, z.B. verschraubt ist. Diese Verschraubungen können in radialen Ansätzen 30 vorgesehen sein, die den Ansätzen 17 entsprechen und diesen axial fluchtend und bündig gegenüberliegen.

Um zu vermeiden, daß der Spalt 26, der sich zwischen dem Spaltrohr 27 und dem Außenmagnettrager 21 befindet, von Bohrspülung durchströmt wird, die abrasive Partikel mit sich führt und Anlaß zu Verschleiß oder funktionsstörenden Ablagerungen sein könnte, ist der Spalt 26 bevorzugt durch eine Dichtungsvorrichtung zur Umgebung hin abgeteilt. Zur Dichtung können alle bekannten oder geeigneten Dichtungsvorrichtungen Anwendung finden, jedoch ist eine Labyrinthdichtung 31 bevorzugt, die von einer den Außenmagnetträger 21 der Zentralmagnetkupplung 20 in geringem Abstand koaxial umgebenden Hülse 32 gebildet ist. Diese Hülse 32 bildet mit der Außenseite des Außenmagnetträgers 21 einen Labyrinthspalt 33 aus, der so eng gestaltet ist, daß eine Durchströmung des Spaltes 26 vermieden ist. Die Hülse 32 ist bei dem dargestellten Beispiel mit dem Anschlußflansch 29 fest verbunden, z.B. bei 34 verschraubt.

Wie ersichtlich erfolgt über die Dauermagnetkupplung 20 ein Antrieb der Welle 12 des Verbrauchers 9 durch den Rotor 6 des Antriebsaggregates 2 auf berührungslosem Wege, wobei der Verbraucher 9 in einem vollständig gekapselten, getrennten System bzw. Abschnitt des Tiefbohrwerkzeuges Anordnung finden kann und vor Zutritt von Bohrspülung zuverlässig geschützt ist.

## Patentansprüche

1. Werkzeug für Tiefbohrungen, mit einem in einem in Gehäuse (1) abgestützten Antriebsaggregats (2), z.B. einem von der Bohrspülung betätigten Tieflochmotor, und zumindest einem über eine Kupplung (20) von dem Antriebsaggregat (2) angetriebenen Verbraucher (9), z.B. Generator, Pumpe oder dgl., wobei als Kupplung eine berührungslose, als Spaltrohrkupplung (27,28,29,30) ausgebildete Dauermagnetkupplung (20) vorgesehen ist, dadurch gekennzeichnet, daß der Spalt (26) zwischen dem Außenmagnetträger (21) und dem Spaltrohr (27,28) von der Bohrspülung führenden Umgebung durch eine Dichtungsvorrichtung (31) abgeteilt ist, die als Labyrinthdichtung ausgebildet ist.

2. Werkzeug nach Anspruch 1, dadurch gekennzeichnet, daß die Dauermagnetkupplung (20) als zylindrische Zentralmagnetkupplung (21,22;24,25) ausgebildet ist.

3. Werkzeug nach Anspruch 1, dadurch gekennzeichnet, daß die Labyrinthdichtung (31) eine den Außenmagnetträger (21) der Kupplung (20) in geringem Abstand koaxial umgebende Hülse (32) umfaßt.

## Claims

1. A tool for deep wells with, supported in a casing (1), a drive unit (2), for example a deep hole motor actuated by the drilling fluid, and with at least one consumer unit (9), e.g. generator, pump or the like, driven by the driving unit (2) through a coupling (20), the coupling provided being a contactless permanent magnet coupling (20) constructed as a split tube coupling (27, 28, 29, 30), characterised in that the gap (26) between the outer magnet carrier (21) and the split tube (27, 28) is divided off from the environment carrying the drilling fluid by a sealing device (31) which is constructed as a labyrinthine seal.

2. A tool according to Claim 1, characterised in that the permanent magnet (20) is constructed as a cylindrical central magnet coupling (21, 22; 24, 25).

3. A tool according to Claim 1, characterised in that the labyrinthine seal (31) comprises a sleeve (32) which coaxially and at a slight distance surrounds the outer magnet carrier (21) of the coupling (20).

## Revendications

1. Outil pour forages profonds, comportant un équipage d'entraînement (2) monté dans un fût (1), par exemple un moteur de fond actionné par la boue de forage, et au moins une charge (9), par exemple une génératrice, une pompe ou l'équivalent, entraînée par l'équipage d'entraînement (2) par l'intermédiaire d'un accouplement, étant entendu qu'à titre d'accouplement est prévu un accouplement à aimants permanents sans contact (20) ayant la forme d'un accouplement à tube d'entrefer (27, 28, 29, 30), caractérisé en ce que l'entrefer (26) entre le porte-aimants extérieur (21) et le tube d'entrefer (27, 28) est séparé de l'environnement qui canalise les boues de forage par un dispositif d'étanchéité (31) qui a la forme d'un joint d'étanchéité à labyrinthe.

2. Outil suivant la revendication 1, caractérisé en ce que l'accouplement à aimants permanents (20) a la forme d'un accouplement à aimants central cylindrique (21, 22; 24, 25).

3. Outil suivant la revendication 1, caractérisé en ce que le joint d'étanchéité à labyrinthe (31) comprend une douille (32) entourant coaxialement le porte-aimants extérieur (21) de l'accouplement (20), à courte distance de celui-ci.

Fig. 1

EP 0 232 891 B1

Fig. 2